# EUROPEAN PATENT APPLICATION

(11) **EP 2 599 619 A1**
(43) Date of publication of application: **05.06.2013**
(21) Application number: 11009490.1
(22) Date of filing: 30.11.2011
(51) Int. Cl.: B32B 3/30, B65D 65/42, B32B 3/26

(54) **Flexible packaging film with multiple touch effect**

(71) Applicant: Amcor Flexibles Kreuzlingen Ltd., 8280 Kreuzlingen (CH)
(72) Inventor: Roos, Francoise, 57930 Oberstinzel (FR); Mota, Vitor, 4425-653 Maia (PT); Pinault, Julien, 67700 Saverne (FR); Jacob, Christophe, 67700 Saint Jean Les Saverne (FR); Luethi, Markus, 8200 Schaffhausen (CH)
(74) Representative: Gernet, Samuel Andreas

(57) **Abstract**

At least one surface (12) of a flexible film (10) with multiple touch effect is covered at least partially with a of varnish layer (14) and the varnish layer (14) has at least partially an embossed roughness pattern (16).

## Description

The invention relates to a flexible film with multiple touch effect and particularly to a flexible packaging film with multi-sensorial effect.

Nowadays flexible film packaging for food products such as e.g. laminate packaging for soups or other dehydrated food are common and well known in the art. A conspicuous part of such food is sold in flexible flat pouches. The packaging film is e.g. a flat laminate in the form of a multilayer film with a polyethylene terephthalate (PET) film as an outer layer and a polyethylene (PE) film as an inner or sealing layer. The PET film can be reverse printed or surface printed and overlacquered with a glossy or matt varnish as a surface finish. Paper is also used as an outer layer.

Flexible laminates with an embossed aluminium foil are used as closure material for beakers or as packaging of a block or cubic-shaped foodstuff-product such as e.g. stock cubes.

It is a long-standing wish for flexible film packaging for food products which allow for a better marketing differentiation compared to packaging made of printed flat film material.

The object of the present invention is to provide a flexible film with multiple touch effect and particularly a flexible packaging film with multi-sensorial effect, in particular for packaging food products.

The aforementioned objective is achieved by way of the invention in that at least one surface of the film is covered at least partially with a layer of varnish and the layer of varnish has at least partially an embossed roughness pattern.

With the flexible film according to the present invention it is now possible to add the touch to the sensations of a packaging and to create a volume effect on a flat film material applying different surface structures to the varnish layer.

The roughness pattern embossed in the varnish layer preferably has peaks and valleys and the mean peak-to-valley height can be the same or different in different surface areas of the film.

The roughness pattern embossed in the varnish layer preferably has peaks and valleys and the mean peak-to-peak distance can be the same or different in different surface areas of the film.

The thickness of the varnish layer can be the same or different in different surface areas of the film.

The varnish layer can be matt or glossy and/or have a soft touch.

A print image can be arranged beneath the varnish layer by surface printing of the film before applying the varnish layer or by reverse printing of an outer layer of the film.

The film can be a mono or a multilayer film.

The flexible film according to the present invention is preferably used as a packaging material for packaging pouches with multi-sensorial effect. The packaging pouch can be of any shape or design, e.g. a flat pouch or a stand-up pouch, a pouch in the form of a doypack, a pillow, or a cheerpack.

The varnish layer on the film can be applied e. g. by rotogravure, flexography, spray coating, extrusion coating, curtain coating or any other application process known in the art.

The embossed roughness pattern is applied to the varnish layer by any customary embossing cylinder.

The varnish can be soft touch, matt, glossy or any other kind of varnish, applied totally or registered, combined with embossing on total or partial surface, with all possible patterns, to create a multi-sensorial effect on the packaging. As per example, the softness is created by the varnish, the roughness and the volume by embossing.

The flexible films according to the present invention can have any laminate structure used in the packaging of food materials and can be a combination of layers of plastic films, paper and aluminium foils, also in combination with barrier layers. To provide barrier properties, plastic films can be coated with a ceramic material, such as SiOₓ or AlOₓ, or coated with an organic barrier material. Plastic films can also be metallised.

A polyethylene or polypropylene layer can e.g. be used as sealing or inner layer forming the pouch inner walls.

Further advantages, features and details of the invention are revealed in the following description of preferred exemplified embodiments and with the aid of the drawing which shows schematically in
- Fig. 1 - 4: the method steps used in the production of flexible film with a varnish layer with an embossed roughness pattern;
- Fig. 5: a plan view of a flat pouch made of flexible flat film with a print image according to the prior art;
- Fig. 6: the flat pouch of Fig. 5 made of flexible flat film with a print image with an additional varnish layer having an embossed roughness pattern according to the present invention;
- Fig. 7: a cross section of a flexible film according to the present invention.

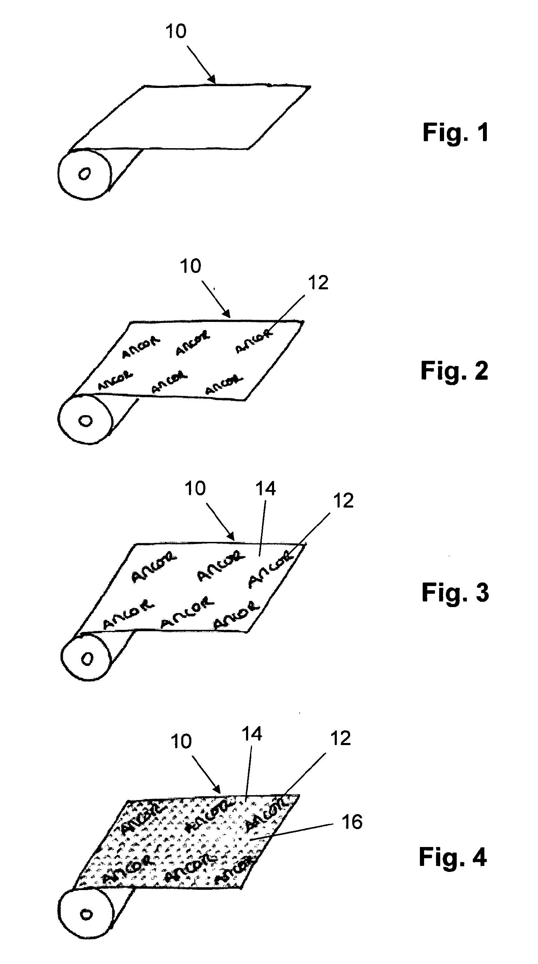

A web of a flexible film 10, such as e.g. a multilayer film in the form of a laminate comprising an outer layer of paper, an aluminium foil and an inner or sealing layer of polyethylene (PE), is shown in Fig. 1. In a first step, the web of the flexible film 10 is fed through a printing station and an image 12 is surface printed on the paper side of the film 10 (Fig. 2).

In a second step, the surface of the flexible film 10 with the print image 12 is covered with a varnish layer 14. The varnish layer 14 can be applied on the web by any known method such as e.g. printing or spraying.

In a third step, the web of flexible film 10 covered with the varnish layer 14 as shown in Fig. 3 is fed through an embossing station in which a roughness pattern 16 is embossed in the varnish layer 14 with the aid of an embossing roll. The web of the flexible film 10 bearing the print image 12 covered with the varnish layer 16 provided with the roughness pattern 16 is shown in Fig. 4.

Fig. 4 shows the surface printed web of the film 10 covered with the varnish layer 14 of Fig. 3. In addition, a roughness pattern 16 is embossed in the varnish layer 14.

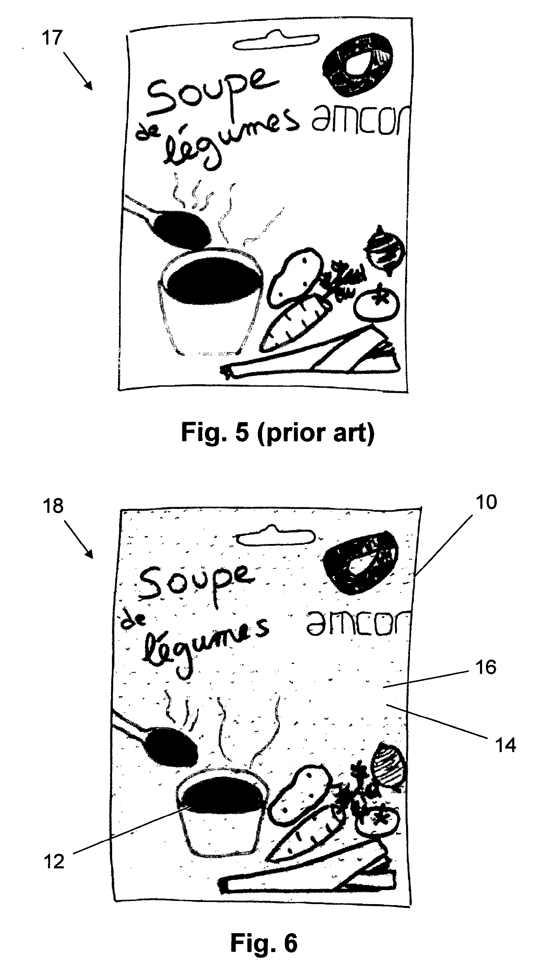

Fig. 5 shows a flat pouch 17 made of flexible flat film with a print image according to the prior art. In case the film is surface printed, the print image may additionally be overlacquered. In contrast to this well known prior art pouch, a flat pouch 18 according to the present invention as shown in Fig. 6 made of flexible film 10 as shown in Fig. 4 is provided with a varnish layer 14 with an embossed roughness pattern 16 which gives the pouch a multiple touch effect.

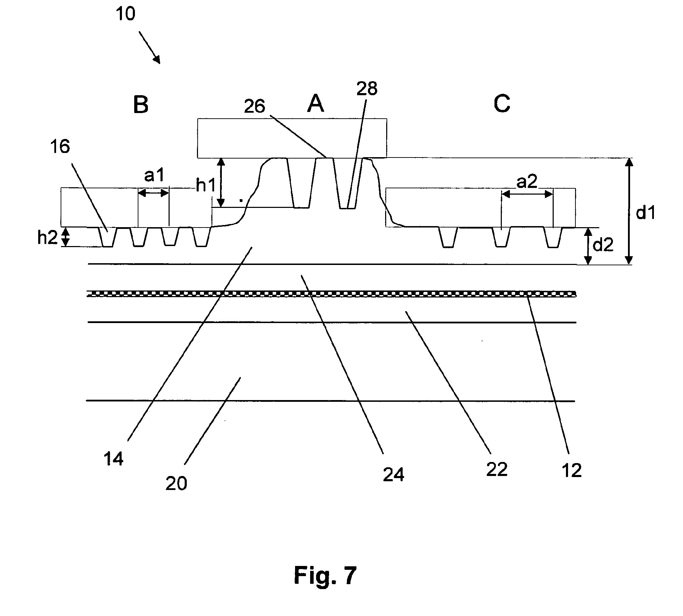

In an exemplified embodiment of a flexible film 10 as shown in Fig. 7 an outer layer of a polyethylene terephthalate (PET) film 24 is reverse printed with an image 12 and laminated to a polyethylene (PE) film 20 as an inner or sealing layer with an intermediate adhesive layer 22. The PET film 24 is covered with a varnish layer 14 with an embossed roughness pattern 16.

In a first surface area A the varnish layer 14 has a first thickness d1 and in a second surface area B and in a third surface area C the varnish layer 14 has a second thickness d2. The first thickness d1 in the first surface area A is greater than the second thickness d2 of the varnish layer 14 in the second and third surface areas B and C.

The roughness pattern 16 embossed in the varnish layer 14 has peaks 26 and valleys 28. The mean peak-to-valley height h1 of the roughness pattern 16 in the first surface area A is greater than the mean peak-to-valley height h2 of the roughness pattern 16 in the second and third surface areas B and C.

The mean peak-to-peak distance a1 in the second surface area B is greater than the mean peak-to-peak distance a2 in the third surface area C.

The difference in peak-to-valley heights h, peak-to-peak distance a and thickness d of the varnish layer 14 in different surface areas A. B, C leads to a different touch effect in different surface areas A, B, C and in combination with the print image 12 and the kind of varnish to a multi-sensorial effect.

## Claims

1. Flexible film with multiple touch effect, **characterised in that** at least one surface (12) of the film (10) is covered at least partially with a varnish layer (14) and the varnish layer (14) has at least partially an embossed roughness pattern (16).

2. Flexible film according to claim 1, wherein the roughness pattern (16) embossed in the varnish layer (14) has peaks (26) and valleys (28) and the mean peak-to-valley height (h1, h2) is the same or different in different surface areas (A, B, C) of the film (10).

3. Flexible film according to claim 1, wherein the roughness pattern (16) embossed in the varnish layer (14) has peaks (26) and valleys (28) and the mean peak-to-peak distance (a1, a2) is the same or different in different surface areas (A, B, C) of the film (10).

4. Flexible film according to any one of claims 1 to 3, wherein the thickness (d1, d2) of the varnish layer (14) is the same or different in different surface areas (A, B, C) of the film (10).

5. Flexible film according to any one of claims 1 to 4, wherein the varnish layer (14) is matt or glossy and/or has a soft touch.

6. Flexible film according to any one of claims 1 to 5, wherein a print image (12) is arranged beneath the varnish layer (14).

7. Flexible film according to any one of claims 1 to 6, wherein the film (10) is a mono or a multilayer film.

8. Process of manufacturing a flexible film (10) with multiple touch effect, **characterised in that** a varnish layer (14) is applied at least partially on at least one surface of the film (10) and the varnish layer (14) applied on the surface of the film (10) is at least partially embossed.

9. Process according to claim 8, wherein an image (12) is surface printed on the film (10) before the varnish layer (14) is applied or reverse printedon an outer layer (24) of the film (10).

10. Use of a flexible film (10) according to any one of claims 1 to 7 as a packaging material with multi-sensorial effect.
